# EUROPEAN PATENT APPLICATION

(11) **EP 1 845 652 A1**
(43) Date of publication of application: **17.10.2007**
(21) Application number: 05820315.9
(22) Date of filing: 20.12.2005
(51) Int. Cl.: H04L 9/08, G09C 1/00

(54) **FILE ENCRYPTION/DECRYPTION METHOD, DEVICE, PROGRAM, AND COMPUTER-READABLE RECORDING MEDIUM CONTAINING THE PROGRAM**

(30) Priority: 28.01.2005 JP 2005021359
(71) Applicant: Oak Information System Corporation, Tokyo 131-0034 (JP); Nec Software Hokuriku, Ltd., Hakusan-shi, Ishikawa, 9202141 (JP)
(72) Inventor: KAWAI, Masashi, OAK INFORMATION SYSTEM CORPORATION, Tokyo 131-0034 (JP); NISHIKAWA, Hiroyuki, Hakusan-shi, Ishikawa 9202141 (JP)
(74) Representative: Greene, Simon Kenneth
(86) International application number: PCT/JP2005/023328
(87) International publication number: WO 2006/080165

(57) **Abstract**

[Object] To achieve both information confidentiality management and early discovery of information leak.

[Solution] A file encrypting/decrypting program makes a computer execute a process including a step of creating a session key (a1); a step of encrypting a file (f1) with the key (a1), thereby creating a file (f2); a step of encrypting the key (a1) with a public key (b1) , thereby creating a key (a2); a step of encrypting the key (a1) with a public key (c1), thereby creating a key (a3); and a step of creating a combined file (f3) including the file (f2) and the keys (a2, a3); and a process including a step of separating the file(f3) into the file (f2) and the keys (a2, a3); a decrypting step of decrypting the file (f2) into the file (f1) with the key (a1) ; a step of decrypting the key (a2) into the key (a1) with a private key (b2) corresponding to the key (b1) and then proceeding to the decrypting step; and a step of decrypting the key (a3) into the key (a1) with a private key (c2) corresponding to the key (c1) and then proceeding to the decrypting step.

## Description

### Technical Field

The present invention relates to technology of encrypting and decrypting files by use of a computer.

### Background Art

File encryption is necessary to restrict readers of a confidential document or the like and to prevent the leak of information when transmitting via a network. The following encrypting methods are known: symmetric-key cryptography that uses an identical key (symmetric key) for both encryption and decryption; and public-key cryptography that uses a pair of different keys --a public key and a private key. Also, there are various encryption/decryption algorithms. The encryption and decryption is described in detail in the following non-patent literature:
Non-patent Literature 1: S. Nishio, et al., "Iwanami Lecture Series, Multimedia Information Science 7, Sharing and Integrating Information", Iwanami Shoten Co., First edition, December 6, 1999, pp. 143-158

### Disclosure of Invention

### Problems to be Solved by the Invention

In recent years, multiple incidents where confidential information of a business company was leaked outside the company have happened, and in many of them, serious damage has been inflicted on business operation. Accordingly, as a countermeasure against the leak of confidential information, files need to be encrypted and managed. Furthermore, software for encrypting and decrypting files needs to be installed uniformly in personal computers that employees use in the business company.

However, to encrypt a file means that only the persons having the key to decrypt the encrypted file can confirm the contents of the file. Hence, even where encryption software is made uniform throughout a business company, if a person allowed to access confidential information encrypts the information and takes the encrypted information outside the company, another person cannot easily confirm and check the contents of the encrypted file, and thus the discovery of the leak of the confidential information would be delayed, resulting in the spread of damage.

A solution to this problem is, for example, a system where, with encryption software being made uniform throughout a business company, all keys for encryption and decryption are registered and arranged to be managed by a person having predetermined authority. However, in this case, the number of keys to be managed is large, and hence it is not practical. It is actually impossible to manage keys created confidentially.

### Means for Solving the Problems

In view of the above problems, the inventors have come up with the present invention by considering the functions that an encryption/decryption program to be used uniformly in a business company is to include. An object of the present invention is to provide a file encrypting/decrypting method, an apparatus, and a program wherein a key for encryption can be freely created and a file encrypted using the key can be decrypted with a "master key" that is managed by a supervisor higher in rank than the creator of the file and wherein the master key itself can be managed strictly.

An aspect of the invention is a file encrypting/decrypting method with which a computer executes a file encrypting process of encrypting a file and a file decrypting process of decrypting the encrypted file,
the file encrypting process including:
a session key creating step of creating a session key (a1) of a symmetric-key cryptography type;
a file encrypting step of encrypting a plain text file (f1) with the session key, to create an encrypted file (f2);
a first encrypting step of encrypting the session key (a1) with a public key (b1) of a public-key cryptography type, to create an encrypted session key (a2);
a second encrypting step of encrypting the session key (a1) with a public key (c1) of the public-key cryptography type, to create an encrypted session key (a3); and
a combined file creating step of creating a combined file including the encrypted file (f2) and the encrypted session keys (2, a3);
the file decrypting process including:
a file separating step of separating the combined file into the encrypted file (f2) and the encrypted session keys (a2, a3) ;
a plain text file decrypting step of, if the computer stores the session key (a1), decrypting the encrypted file (f2) into the plain text file (f1) with use of the session key (a1);
a first decrypting step of, if the computer has a private key (b2) corresponding to the public key (b1), decrypting the encrypted session key (a2) into the session key (a1) with use of the private key (b2) and then performing the plain text file decrypting step; and
a second decrypting step of, if the computer has a private key (c2) corresponding to the public key (c1), decrypting the encrypted session key (a3) into the session key (a1) with use of the private key (c2) and then performing the plain text file decrypting step.

The file encrypting/decrypting method may be arranged such that
the file encrypting process includes:
a password input step of receiving a password (p1) through user input;
a session key creating step of creating a session key (a1) of a symmetric-key cryptography type;
a file encrypting step of encrypting a plain text file (f1) with the session key, to create an encrypted file (f2);
a session key modifying step of associating the session key (a1) with the password (p1) and creating a modified session key (a4) obtained by modifying the session key (a1) according to a predetermined algorithm;
a first encrypting step of encrypting the password (p1) with a public key (b1) of a public-key cryptography type, to create an encrypted password (p2);
a second encrypting step of encrypting the password (p1) with a public key (c1) of the public-key cryptography type, to create an encrypted password (p3); and
a combined file creating step of creating a combined file including the encrypted file (f2), the modified session key (a3), and the encrypted passwords (p2, p3); and
the file decrypting process includes:
a file separating step of separating the combined file into the encrypted file (f2), the modified session key (a4), and the encrypted passwords (p2, p3);
a password input step of receiving a password through user input;
a plain text file decrypting step of, if the password inputted matches the password (p1), restoring the modified session key (a4) to the session key (a1) according to the algorithm, and decrypting the encrypted file (f2) into the plain text file (f1) with use of the session key (a1);
a first decrypting step of, if the computer has a private key (b2) corresponding to the public key (b1), decrypting the encrypted password (p2) into the password (p1) with use of the private key (b2) and providing the password (p1) as the password inputted to the plain text file decrypting step; and
a second decrypting step of, if the computer has a private key (c2) corresponding to the public key (c1), decrypting the encrypted password (p3) into the password (p1) with use of the private key (c2) and providing the password (p1) as the password inputted to the plain text file decrypting step.

Alternatively, the file encrypting/decrypting method may be arranged such that
the file encrypting process includes:
a password input step of receiving a password (p1) through user input;
a modified session key creating step of modifying, according to a predetermined algorithm, the password (p1) into a session key (p4) of a symmetric-key cryptography type;
a session key creating step of creating a session key (a1) of the symmetric-key cryptography type;
a file encrypting step of encrypting a plain text file (f1) with the session key (a1), to create an encrypted file (f2);
a verifying data creating step of creating verifying data (d1) for the session key based on the session key (a1);
a first encrypting step of encrypting the session key (a1) with a public key (b1) of a public-key cryptography type, to create an encrypted session key (a2);
a second encrypting step of encrypting the session key (a1) with a public key (c1) of the public-key cryptography type, to create an encrypted session key (a3);
a third encrypting step of encrypting the session key (a1) with the session key (d1), to create an encrypted session key (a5) ; and
a combined file creating step of creating a combined file including the encrypted file (f2), the verifying data (d1), and the three encrypted session keys (a2, a3, a5); and
   the file decrypting process includes:
   a file separating step of separating the combined file into the encrypted file (f2), the verifying data (d1), and the three encrypted session keys (a2, a3, a5);
   the password input step;
   the modified session key creating step;
   a plain text file decrypting step of decrypting the encrypted file (f2) into the plain text file (f1) with use of the session key (a1);
   a first decrypting step of, if the computer has a private key (b2) corresponding to the public key (b1), decrypting the encrypted session key (a2) into the session key (a1) with use of the private key (b2), verifying the session key (a1) against the verifying data (d1), and then performing the plain text file decrypting step;
   a second decrypting step of, if the computer has a private key (c2) corresponding to the public key (c1), decrypting the encrypted session key (a3) into the session key (a1) with use of the private key (c2), verifying the session key (a1) against the verifying data (d1), and then performing the plain text file decrypting step; and
   a third decrypting step of decrypting the encrypted session key (a5) into the session key (a1) with use of the session key (p4) created in the modified session key creating step, verifying the session key (a1) against the verifying data (d1), and then performing the plain text file decrypting step.

In the file encrypting/decrypting method, the private key (c2) may be digitally-certificated with a private key (e2) of the public-key cryptography type, and in the file decrypting process, only if a private key (x) in the computer is verified against a public key (e1) corresponding to the private key (e2) and the private key (x) is certified as the private key (c2), the second decrypting step may be executed.

Further, the file encrypting/decrypting method may be arranged such that the public key (c1) is digitally-certificated with a private key (e2) of the public-key cryptography type, and in the file encrypting process, only if a public key (y) in the computer is verified against a public key (e1) corresponding to the private key (e2) and the public key (y) is certified as the public key (c1), the other steps of the file encrypting process are validated.

According to the present invention, there are also provided an apparatus and program that execute the file encrypting/decrypting method and a computer-readable recording medium storing the program.

### <Cross-Reference to Related Applications>

The present application claims priority from Japanese Patent Application No. 2005-21359 filed on January 28, 2005, which is herein incorporated by reference.

### Brief Description of Drawings

FIG. 1 is a schematic diagram showing a case where a file encrypting/decrypting program according to an embodiment of the present invention is stored in a recording medium;
FIG. 2 is a schematic diagram showing an encrypting process according to the program;
FIG. 3 is a schematic diagram showing a decrypting process according to the program;
FIG. 4 shows the flow of the encrypting process (A) and the flow of the decrypting process (B);
FIG. 5 is a schematic diagram showing an encrypting process according to a first processing method of a modified example of the program;
FIG. 6 is a schematic diagram showing a decrypting process according to the first processing method;
FIG. 7 is a schematic diagram showing an encrypting process according to a second processing method of a modified example of the program; and
FIG. 8 is a schematic diagram showing a decrypting process according to the second processing method.

### <Explanation of Reference Numerals>

1 Product public key; 2 Product private key; 11 Company public key; 13 Company private key; 15 Group public key; 16 Group private key; 21 Session key; 31 Plain text file; 32 Encrypted file; 41-43 Combined files; 51 Password

### Best Mode for Carrying Out the Invention

A file encxypting/decrypting program according to an embodiment of the present invention is stored in a medium such as a CD-ROM to be provided and installed in a computer. In this embodiment, a distributor of the program manages business companies, which are in a license agreement with the distributor, using unique license codes. The distributor creates a public key and a private key for each license code, and stores the created public key (company public key) and private key (company private key) and the program body in a CD-ROM and delivers it to each business company. Specifically, the distributor creates and manages a public key (product public key) and a private key (product private key) of the public-key cryptography type, the product private key and the product public key being common among the same programs, which serve as the products. The program includes the company public key encrypted with the product private key (an encrypted company public key) and codes corresponding to the body of the program that is installed in a computer to perform various processes. The distributor delivers CD-ROMs storing these keys and the code compiled to the business company in concern. Note that the product public key may be made available for being downloaded from a Web site of a certification organization or the distributor or in the same CD-ROM storing the program.

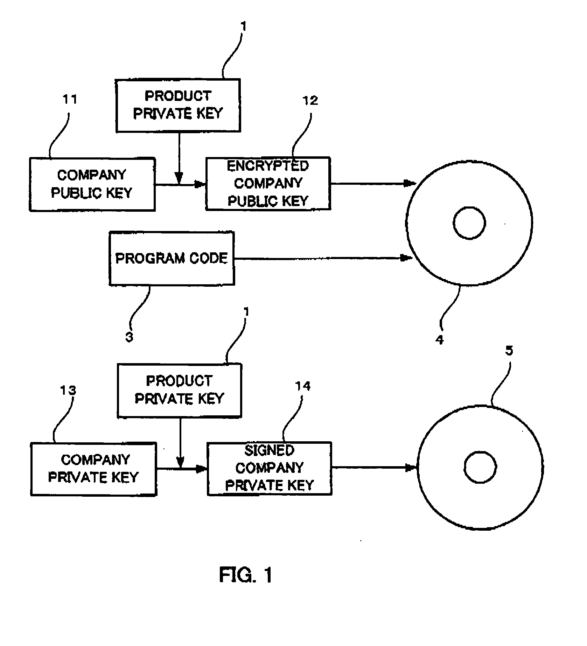

FIG. 1 shows schematically the state where the program is stored in a CD-ROM. Delivered to the business company are a CD-ROM 4 storing an encrypted company public key 12 into which a company public key 11 has been encrypted with a product private key 1 and codes 3 describing the program, and a CD-ROM 5 storing a signed product private key 14 obtained by signing a digital signature on the company private key 13 using the product private key 1. Note that encrypting the company public key 11 with the product private key 1 is substantially equal in meaning to signing a digital signature on the company public key 11 with use of the product private key 1. Furthermore, the digital signature of the company private key 13 may be achieved by encrypting the company private key 13 itself with the product private key 1 like the company public key 11, or by encrypting, with the product private key 1, a digest of the company private key 13 created according to a predetermined algorithm such as a hash function. Where the digest has been encrypted, the company private key 13 itself may be stored in the CD-ROM 5 along with the signature. Note that if the company private key 13 can be strictly managed, the company private key 13 need not be digitally-certificated and may be stored and saved in the manager's computer. Likewise, the company public key 11 may be stored in the CD-ROM 4 without being encrypted.

### ===Usage in the business company===

In the present embodiment, it is assumed that the program from the CD-ROM 4 is installed in all computers that the employees use in the business company and other encrypting/decrypting programs are prohibited from being used. In addition, the program includes a function of creating a public key and a private key of the public-key cryptography type, and for each department, its director has created a public key (group public key) and a private key (group private key) on his/her computer and has distributed the public key to the computers of other employees in the department.

### ===Cryptograph processing system===

A computer that encrypts and decrypts files according to the method of the present embodiment (hereinafter called a cryptograph processing system) encrypts a plain text file of interest with a private key (hereinafter called a session key) according to symmetric-key cryptography and uses a known "digital envelope" technique which encrypts the session key with a public key according to public-key cryptography. By this means, file confidentiality management and quick discovery of leaks are both achieved in the business company.

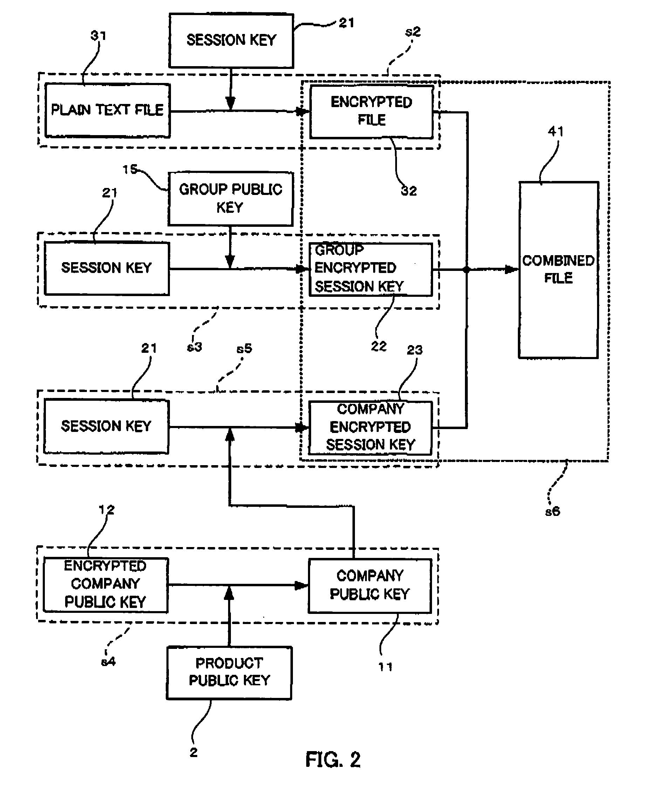

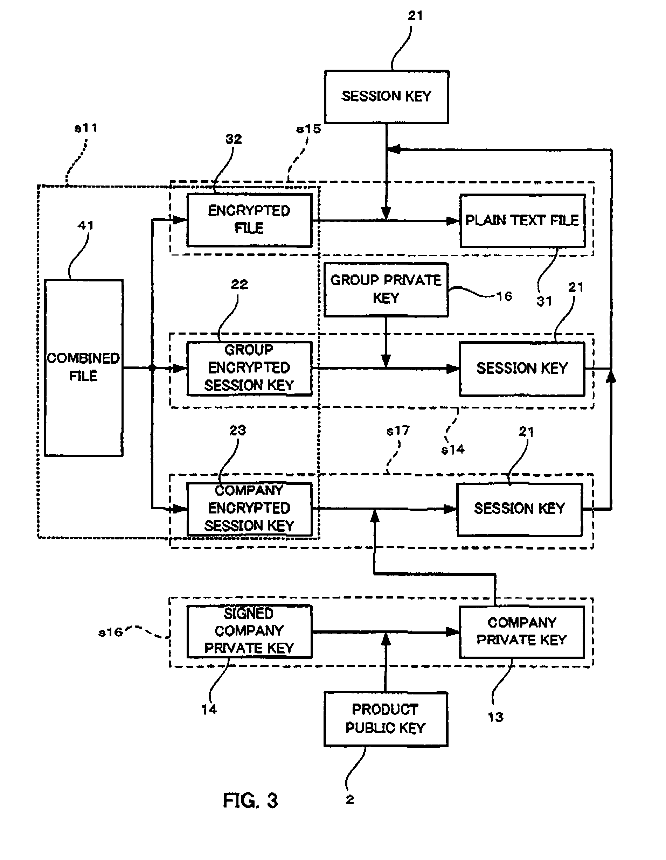

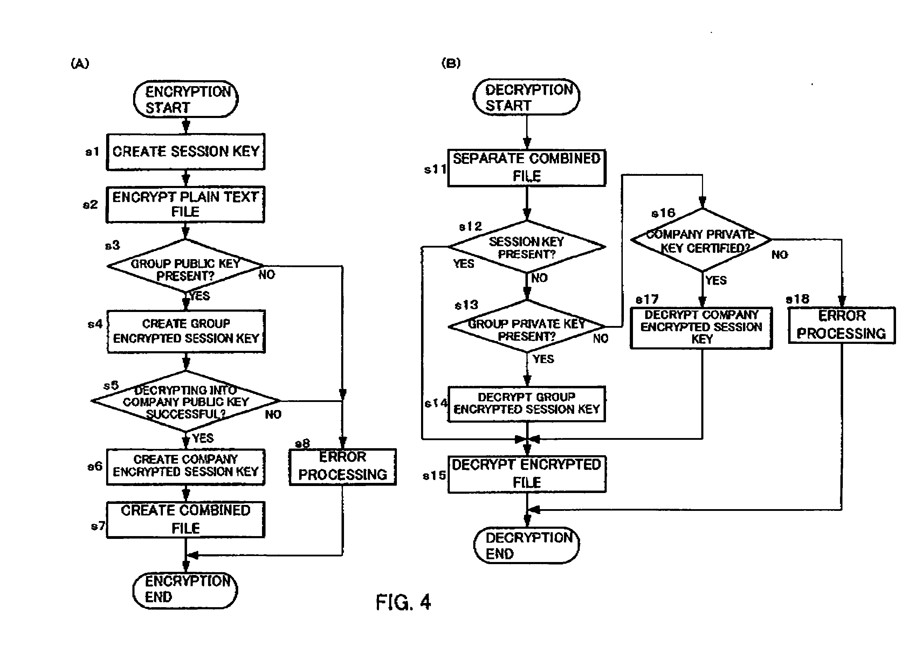

FIGS. 2 and 3 show schematically the encrypting and decrypting of files using the cryptograph processing system. (A) and (B) in FIG. 4 show the processing flow of encryption and decryption, respectively. First, a session key 21 is created (s1), and a plain text file 31 of interest is encrypted with the session key 21 into an encrypted file 32 (s2). The session key 21 is encrypted with a group public key 15 into a group encrypted session key 22 (s3). By decrypting the encrypted company public key 12 with the product public key 2, the company public key 11 is obtained, and the session key 21 is encrypted with the company public key 11 into a company encrypted session key 23 (s4 → s5). Then, a combined file 41 containing the encrypted file 32, the group encrypted session key 22, and the company encrypted session key 23, which have been made through the above-mentioned process, is created (s6) . In this embodiment, the creation of the company encrypted session key 23 without going through the decryption of the company public key 11 (s4) is prohibited. If the company public key 11 is read in without going through the decryption of the company public key 11 (s4), a statement to the effect that the plain text file 31 cannot be encrypted is displayed, and an error processing (s7) such as invalidating the encryption process up to this point is performed and the execution of the program finishes. By this means, a person who has obtained the company public key 11 in an unauthorized manner is prevented from pretending to be the creator of the plain text file 31. Needless to say, the decryption of the company public key may be performed at the beginning of the encryption process, and whether to proceed to the later processes or to stop may be decided depending on the decrypting result.

In the decryption, first, the combined file 41 is separated into the encrypted file 32, the group encrypted session key 22, and the company encrypted session key 23 (s11). If the cryptograph processing system executing the decryption process has the session key 21, then the encrypted file 32 obtained by the separation is decrypted with the session key 21 into the plain text file 31 (s12 → s15) . Meanwhile, even if the system does not have the session key 21, if it has a group private key 16, the session key 21 is obtained by decrypting the group encrypted session key 22 with the group private key 16, and the encrypted file 32 is decrypted with the session key 21 into the plain text file 31 (s12 → s13 → s14 → s15) . Further, even if the system has neither the session key 21 nor the group private key 16, if it has a signed company private key 14, the signed company private key 14 is verified against the product public key 1 (s12 → s13 → s16), and using the verified key as the company private key 13, the company encrypted session key 23 is decrypted into the session key 21 (s16 → s17). Then, the encrypted file 32 is decrypted with that session key 21 into the plain text file 31 (s15). If the verification fails, it is perceived that the company private key 13 has been obtained in an unauthorized manner, and an error processing (s18) is performed such as displaying a statement to the effect that the encrypted file 32 cannot be decrypted, and the execution of the process finishes.

The cryptograph processing system can be applied to, for example, a known packet sniffing technique which monitors the files being transmitted from inside the company to the outside via a network. Specifically, by providing a host computer, which monitors the network by use of packet sniffing, with functions of the cryptograph processing system, a group private key, and a company private key, if an employee attempts to encrypt a file with a session key created by the employee and transmit the file to a person outside the company via the network, the contents of the file can be examined quickly without obtaining the session key and performing decrypting. Conventionally, when examining whether a file is for internal use only, it takes a lot of time and work to obtain the session key and perform decryption.

### ===Operational environment===

In the above embodiment, even the creator cannot see the code representing the session key 21. In such an encryption procedure, the program creates, for each session key 21, a special folder (management folder) to manage files to be encrypted or decrypted, and when the cryptograph processing system receives a user input to store a plain text file 31 in the management folder, the plain text file 31 is encrypted with the session key 21 for that folder, and a combined file 41 including the encrypted file 32 and an encrypted session key obtained by encrypting the session key 21 with the group public key 15 or the company public key 11 is stored in the management folder. In response to a user input to read out the combined file 41 from the management folder, the plain text file 31 may be obtained from the combined file 41 in the way decided depending on the type of the decrypting key (the session key 21, the group private key 16, or the company private key 13) being managed by the cryptograph processing system that has received the user input.

### ===Encrypting /decrypting process associated with a password===

The operational environment may configured such that a password is required, for example, when storing a plain text file 31 in the management folder or obtaining the plain text file 31 from a combined file 41 stored in the management folder. In this case, the following two methods -the first and second processing methods- can be considered.

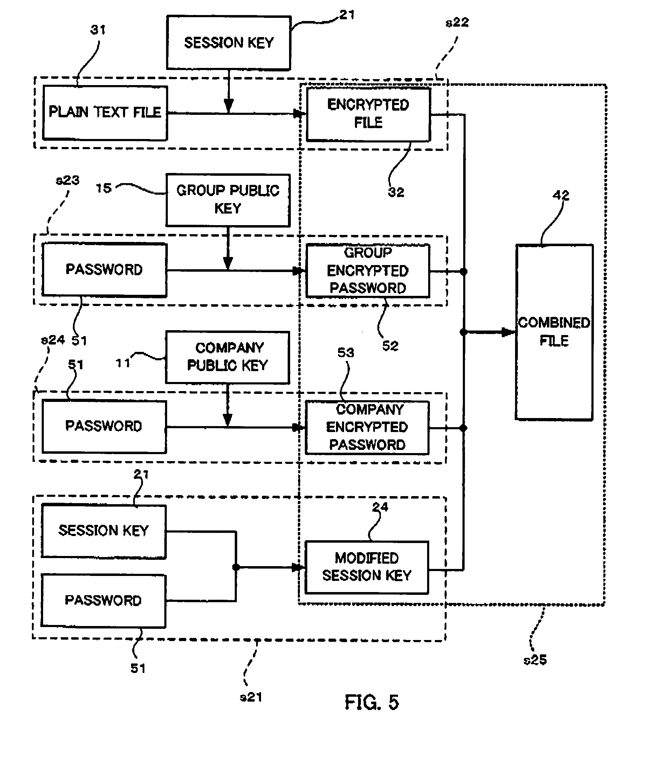

FIG. 5 shows schematically the encrypting process of the first processing method. In the encrypting process, first, a password 51 inputted by a user is received and stored. The session key 21 of the symmetric-key cryptography type is created, and a modified session key 24 obtained by modifying the session key 21 into such a form that the modified session key cannot be used if the password 51 is not correct is created (s21). For example, the session key 21 is modified according to a predetermined algorithm, and data created by associating the password with the modified session key is managed as a modified session key 24.

Next, the plain text file 31 is encrypted with the session key 21 into an encrypted file 32 (s22). Then, the password 51 is encrypted with the group public key 15 and the company public key 11 thereby creating a group encrypted password 52 and a company encrypted password 53 (s23, s24), and a combined file 42 including the encrypted file 32, the modified session key 24, the group encrypted password 52, and the company encrypted password 53 is created (s25).

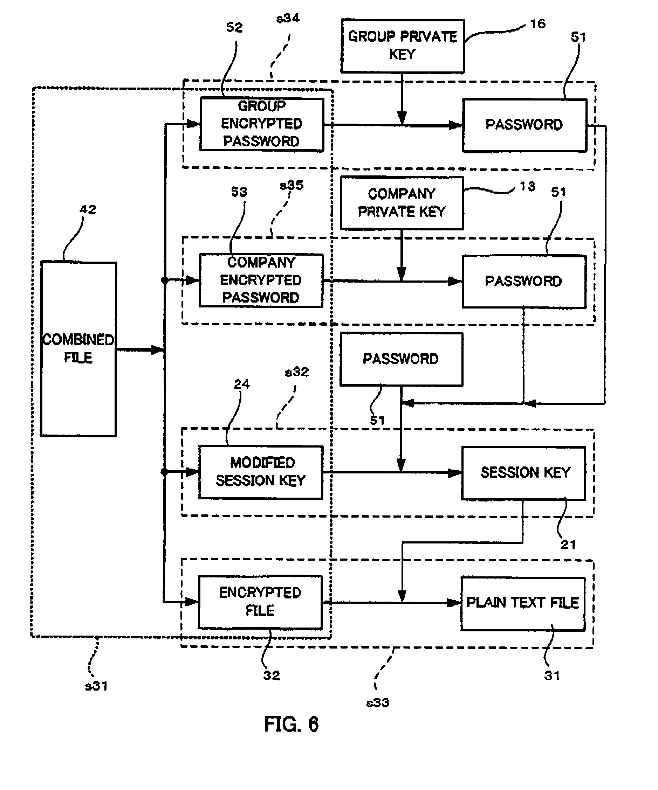

FIG. 6 shows schematically the decrypting process of the first processing method. In the decrypting process for the encrypted file 32, first, the combined file 42 is separated into the encrypted file 32, the modified session key 24, the group encrypted password 52, and the company encrypted password 53 (s31). The process beyond this separation varies depending on the decrypting key (the password 51, the group private key 16, or the company private key 13) being managed by the cryptograph processing system.

When receiving an appropriate decrypt instruction such as a user input to read out the combined file 42 from the management folder, the cryptograph processing system examines the decrypting key that it manages. If a password is being managed, the cryptograph processing system prompts the user to input the password 51 via its user interface. If the password 51 is correctly entered through user input, the modified session key 24 is restored to the session key 21, and the encrypted file 32 is decrypted into the plain text file 31 with use of the session key 21 (s32 → s33).

If the group private key 16 is being managed, the cryptograph processing system obtains the password 51 by decrypting the group encrypted password 52 with use of the group private key 16 in response to a decrypt instruction. Then, the modified session key 24 is restored to the session key 21 with use of the password 51, and the encrypted file 32 is decrypted into the plain text file 31 with use of the session key 21 (s34 → s32 → s33). In the decrypting process based on the company private key 13, a certificated company private key is verified against the product public key, and the company encrypted password 53 is decrypted with the company private key 13 to obtain the password 51. Then, the modified session key is restored to the session key and the encrypted file is decrypted (s35 → s32 → s33).

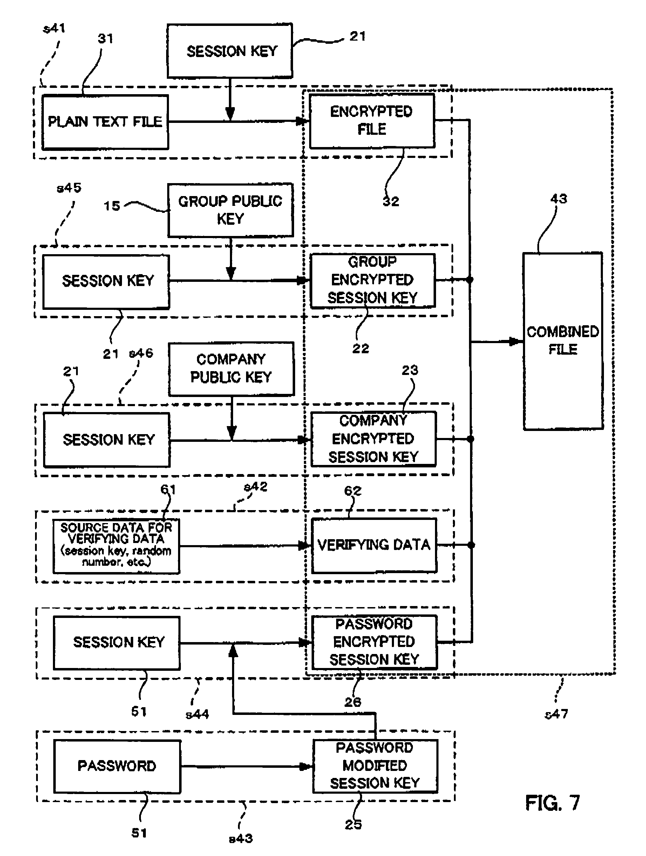

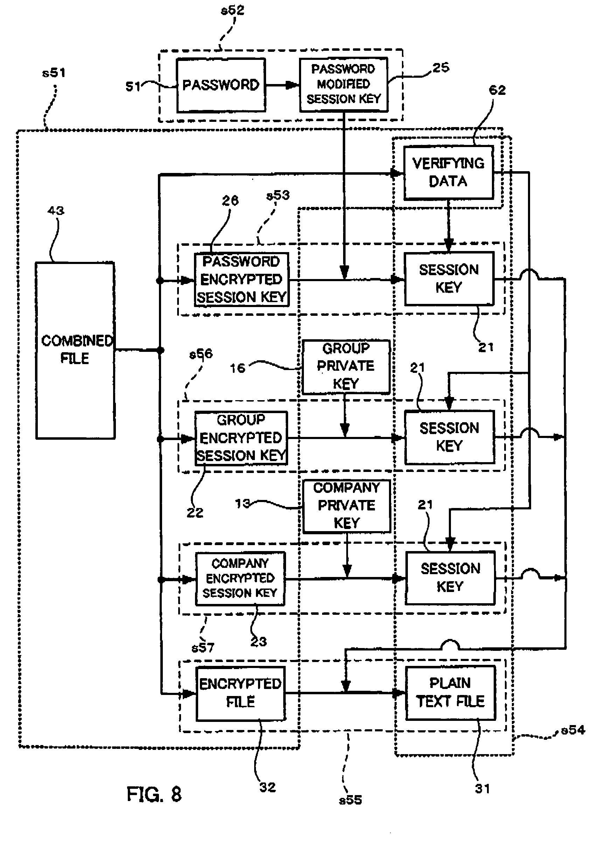

As to the second processing method of the encrypting/decrypting process associated with a password, its encrypting process is shown schematically in FIG. 7 and its decrypting process is shown schematically in FIG. 8. In the encrypting process, first, a password 51 inputted by a user is received and stored. A session key 21 of the Symmetric-key cryptography type is created. Then, a plain text file 31 is encrypted into an encrypted file 32 with use of the session key 21 (s41). Also, a piece of verifying data 62 is created from appropriate data 61 such as the session key 21 (s42). The verifying data 62 may be, for example, a hash value into which the session key 21 is converted by a hash function, or a combination of a random number and an encrypted random number into which the random number is encrypted with the session key 21.

Next, a password modified session key 25 into which the password 51 is modified according to a predetermined algorithm is created, the password modified session key 25 being a session key of the symmetric-key cryptography type different from the session key 21 that is used when encrypting the plain text file 31 (s43) . Note that the password modified session key 25 may be created according to an appropriate algorithm such as converting the password 51 of a variable length into the password modified session key 25 of a fixed length with use of a hash function.

Next, the session key 21 is encrypted with the password modified session key 25, the group public key 15, and the company public key 11 respectively into a password encrypted session key 26, a group encrypted session key 22, and a company encrypted session key 23 (s44, s45, s46). Then, a combined file 43 including the encrypted file 32, the verifying data 62, the password encrypted session key 26, the group encrypted session key 22, and the company encrypted session key 23 is created (s47).

In the decrypting process for the encrypted file 32, first, the combined file 43 is separated into the encrypted file 32, the verifying data 62, the password encrypted session key 26, the group encrypted session key 22, and the company encrypted session key 23 (s51). As in the first processing method, the process beyond this separation (s51) also varies depending on the decrypting key (13, 16, 51) being managed by the cryptograph processing system.

If a password 51 is being managed in the cryptograph processing system, the user input of a password is receivable in response to a decrypt instruction. If a correct password 51 is entered, the password modified session key 25 is created from this password 51 according to the above algorithm, and by decrypting the password encrypted session key 26 with the password modified session key 25, the session key 21 is obtained (s53).

Note that in the second processing method, the session key (hereinafter, called a key x) obtained in the decrypting process is verified against the verifying data 62 (s54), and if the key x is not the session key 21 obtained in an authorized manner, the encrypted file 32 is not allowed to be decrypted into the plain text file 31. For example, if the verifying data 62 is the hash value of the session key 21, the hash values of the key x and of the verifying data 62 are compared. If both the hash values match, the key x is certified as the session key 21. If the verifying data 62 consists of a random number and an encrypted random number, the random number in the verifying data 62 may be compared to a random number obtained by decrypting the encrypted random number with the key x. If, in the verifying process (s54), the restored key x is certified as the authorized session key 21, the encrypted file 32 is decrypted into the plain text file 31 with use of the authorized session key 21 (s55).

If the group private key 16 is being managed in the cryptograph processing system, the group encrypted session key 22 is decrypted with the group private key 16 (s56), and if the key x obtained by this decryption is certified as the session key 21 like the above, the encrypted file 32 is decrypted into the plain text file 31 with use of this session key 21 (s56 → s54 → s55) . If the company private key 13 is being managed, then by going through the decrypting process of the company encrypted session key 23 with the company private key 13 and the certifying process of the key x obtained by this decryption process, the encrypted file 32 is decrypted into the plain text file 31 (s57 → s54 → s55).

### Industrial Applicability

According to the file encrypting/decrypting program of the present invention, a key for encrypting files with can be freely created, and a master key for decrypting the files encrypted with the key can also be created. Further, the master key can be managed strictly. Therefore, information confidentiality management and early discovery of leaks can both be achieved.

## Claims

1. A file encrypting/decrypting method with which a computer executes a file encrypting process of encrypting a file and a file decrypting process of decrypting the encrypted file,
the file encrypting process comprising:
a session key creating step of creating a session key (a1) of a symmetric-key cryptography type;
a file encrypting step of encrypting a plain text file (f1) with the session key, to create an encrypted file (f2);
a first encrypting step of encrypting the session key (a1) with a public key (b1) of a public-key cryptography type, to create an encrypted session key (a2);
a second encrypting step of encrypting the session key (a1) with a public key (c1) of the public-key cryptography type, to create an encrypted session key (a3); and
a combined file creating step of creating a combined file including the encrypted file (f2) and the encrypted session keys (2, a3);
the file decrypting process comprising:
a file separating step of separating the combined file into the encrypted file (f2) and the encrypted session keys (a2, a3);
a plain text file decrypting step of, if the computer stores the session key (a1), decrypting the encrypted file (f2) into the plain text file (f1) with use of the session key (a1);
a first decrypting step of, if the computer has a private key (b2) corresponding to the public key (b1), decrypting the encrypted session key (a2) into the session key (a1) with use of the private key (b2) and then performing the plain text file decrypting step; and
a second decrypting step of, if the computer has a private key (c2) corresponding to the public key (c1), decrypting the encrypted session key (a3) into the session key (a1) with use of the private key (c2) and then performing the plain text file decrypting step.

2. A file encrypting/decrypting method with which a computer executes a file encrypting process of encrypting a file and a file decrypting process of decrypting the encrypted file,
the file encrypting process comprising:
a password input step of receiving a password (p1) through user input;
a session key creating step of creating a session key (a1) of a symmetric-key cryptography type;
a file encrypting step of encrypting a plain text file (f1) with the session key, to create an encrypted file (f2);
a session key modifying step of associating the session key (a1) with the password (p1) and creating a modified session key (a4) obtained by modifying the session key (a1) according to a predetermined algorithm;
a first encrypting step of encrypting the password (p1) with a public key (b1) of a public-key cryptography type, to create an encrypted password (p2);
a second encrypting step of encrypting the password (p1) with a public key (c1) of the public-key cryptography type, to create an encrypted password (p3); and
a combined file creating step of creating a combined file including the encrypted file (f2), the modified session key (a3), and the encrypted passwords (p2, p3);
the file decrypting process comprising:
a file separating step of separating the combined file into the encrypted file (f2), the modified session key (a4), and the encrypted passwords (p2, p3);
a password input step of receiving a password through user input;
a plain text file decrypting step of, if the password inputted matches the password (p1), restoring the modified session key (a4) to the session key (a1) according to the algorithm, and decrypting the encrypted file (f2) into the plain text file (f1) with use of the session key (a1);
a first decrypting step of, if the computer has a private key (b2) corresponding to the public key (b1), decrypting the encrypted password (p2) into the password (p1) with use of the private key (b2) and providing the password (p1) as the password inputted to the plain text file decrypting step; and
a second decrypting step of, if the computer has a private key (c2) corresponding to the public key (c1), decrypting the encrypted password (p3) into the password (p1) with use of the private key (c2) and providing the password (p1) as the password inputted to the plain text file decrypting step.

3. A file encrypting/decrypting method with which a computer executes a file encrypting process of encrypting a file and a file decrypting process of decrypting the encrypted file,
the file encrypting process comprising:
a password input step of receiving a password (p1) through user input;
a modified session key creating step of modifying, according to a predetermined algorithm, the password (p1) into a session key (p4) of a symmetric-key cryptography type;
a session key creating step of creating a session key (a1) of the symmetric-key cryptography type;
a file encrypting step of encrypting a plain text file (f1) with the session key (a1), to create an encrypted file (f2);
a verifying data creating step of creating verifying data (d1) for the session key based on the session key (a1);
a first encrypting step of encrypting the session key (a1) with a public key (b1) of a public-key cryptography type, to create an encrypted session key (a2);
a second encrypting step of encrypting the session key (a1) with a public key (c1) of the public-key cryptography type, to create an encrypted session key (a3);
a third encrypting step of encrypting the session key (a1) with the session key (d1), to create an encrypted session key (a5); and
a combined file creating step of creating a combined file including the encrypted file (f2), the verifying data (d1), and the three encrypted session keys (a2, a3, a5);
the file decrypting process comprising:
a file separating step of separating the combined file into the encrypted file (f2), the verifying data (d1), and the three encrypted session keys (a2, a3, a5);
the password input step;
the modified session key creating step;
a plain text file decrypting step of decrypting the encrypted file (f2) into the plain text file (f1) with use of the session key (a1);
a first decrypting step of, if the computer has a private key (b2) corresponding to the public key (b1), decrypting the encrypted session key (a2) into the session key (a1) with use of the private key (b2), verifying the session key (a1) against the verifying data (d1), and then performing the plain text file decrypting step;
a second decrypting step of, if the computer has a private key (c2) corresponding to the public key (c1), decrypting the encrypted session key (a3) into the session key (a1) with use of the private key (c2), verifying the session key (a1) against the verifying data (d1), and then performing the plain text file decrypting step; and
a third decrypting step of decrypting the encrypted session key (a5) into the session key (a1) with use of the session key (d1) created in the modified session key creating step, verifying the session key (a1) against the verifying data (d1), and then performing the plain text file decrypting step.

4. The file cncrypting/decrypting method according to any one of claims 1 to 3, wherein the private key (c2) is digitally-certificated with a private key (e2) of the public-key cryptography type, and in the file decrypting process, only if a private key (x) in the computer is verified against a public key (e1) corresponding to the private key (e2) and the private key (x) is certified as the private key (c2), the second decrypting step is executed.

5. The file encrypting/decrypting method according to any one of claims 1 to 3, wherein the public key (c1) is digitally-certificated with a private key (e2) of the public-key cryptography type, and in the file encrypting process, only if a public key (y) in the computer is verified against a public key (e1) corresponding to the private key (e2) and the public key (y) is certified as the public key (c1), the other steps of the file encrypting process are validated.

6. A file encrypting/decrypting apparatus constituted by a computer having a program installed therein, the file encrypting/decrypting apparatus comprising:
a file encrypting section that encrypts a file; and
a file decrypting section that decrypts the file encrypted by the file encrypting section;
the file encrypting section including:
a session key creating subsection that creates a session key (a1) of a symmetric-key cryptography type;
a file encrypting subsection that encrypts a plain text file (f1) with the session key, to create an encrypted file (f2);
a first encrypting subsection that encrypts the session key (a1) with a public key (b1) of a public-key cryptography type, to create an encrypted session key (a2);
a second encrypting subsection that encrypts the session key (a1) with a public key (c1) of the public-key cryptography type, to create an encrypted session key (a3); and
a combined file creating subsection that creates a combined file including the encrypted file (f2) and the encrypted session_keys (2, a3);
the file decrypting section including:
a file separating subsection that separates the combined file into the encrypted file (f2) and the encrypted session keys (a2, a3);
a plain text file decrypting subsection that, if the computer stores the session key (a1), decrypts the encrypted file (f2) into the plain text file (f1) with use of the session key (a1);
a first decrypting subsection that, if the computer has a private key (b2) corresponding to the public key (b1), decrypts the encrypted session key (a2) into the session key (a1) with use of the private key (b2) and then executes the plain text file decrypting step; and
a second decrypting subsection that, if the computer has a private key (c2) corresponding to the public key (c1), decrypts the encrypted session key (a3) into the session key (a1) with use of the private key (c2) and then executes the plain text file decrypting step.

7. A file encxypting/decrypting apparatus constituted by a computer having a program installed therein, the file encrypting/decrypting apparatus comprising:
a file encrypting section that encrypts a file; and
a file decrypting section that decrypts the file encrypted by the file encrypting section;
the file encrypting section including:
a password input step of receiving a password (p1) through user input;
a session key creating subsection that creates a session key (a1) of a symmetric-key cryptography type;
a file encrypting subsection that encrypts a plain text file (f1) with the session key, to create an encrypted file (f2);
a session key modifying subsection that associates the session key (a1) with the password (p1) and creates a modified session key (a4) obtained by modifying the session key (a1) according to a predetermined algorithm;
a first encrypting subsection that encrypts the password (p1) with a public key (b1) of a public-key cryptography type, to create an encrypted password (p2);
a second encrypting subsection that encrypts the password (p1) with a public key (c1) of the public-key cryptography type, to create an encrypted password (p3); and
a combined file creating subsection that creates a combined file including the encrypted file (f2), the modified session key (a3), and the encrypted passwords (p2, p3) ;
the file decrypting section including:
a file separating subsection that separates the combined file into the encrypted file (f2), the modified session key (a4), and the encrypted passwords (p2, p3);
a password input subsection that receives a password through user input;
a plain text file decrypting subsection that, if the password inputted matches the password (p1), restores the modified session key (a4) to the session key (a1) according to the algorithm, and decrypts the encrypted file (f2) into the plain text file (f1) with use of the session key (a1);
a first decrypting subsection that, if the computer has a private key (b2) corresponding to the public key (b1), decrypts the encrypted password (p2) into the password (p1) with use of the private key (b2) and provides the password (p1) as the password inputted to the plain text file decrypting subsection; and
a second decrypting subsection that, if the computer has a private key (c2) corresponding to the public key (c1), decrypts the encrypted password (p3) into the password (p1) with use of the private key (c2) and provides the password (p1) as the password inputted to the plain text file decrypting subsection.

8. A file encrypting/decrypting apparatus constituted by a computer having a program installed therein, the file encrypting/decrypting apparatus comprising:
a file encrypting section that encrypts a file; and
a file decrypting section that decrypts the file encrypted by the file encrypting section;
the file encrypting section including:
a password input subsection that receives a password (p1) through user input;
a modified session key creating subsection that modifies, according to a predetermined algorithm, the password (p1) into a session key (p4) of a symmetric-key cryptography type;
a session key creating subsection that creates a session key (a1) of the symmetric-key cryptography type;
a file encrypting subsection that encrypts a plain text file (f1) with the session key (a1), to create an encrypted file (f2);
a verifying data creating subsection that creates verifying data (d1) for the session key based on the session key (a1);
a first encrypting subsection that encrypts the session key (a1) with a public key (b1) of a public-key cryptography type, to create an encrypted session key (a2);
a second encrypting subsection that encrypts the session key (a1) with a public key (c1) of the public-key cryptography type, to create an encrypted session key (a3);
a third encrypting subsection that encrypts the session key (a1) with the session key (d1), to create an encrypted session key (a5); and
a combined file creating subsection that creates a combined file including the encrypted file (f2), the verifying data (d1), and the three encrypted session keys (a2, a3, a5);
the file decrypting section including:
a file separating subsection that separates the combined file into the encrypted file (f2), the verifying data (d1), and the three encrypted session keys (a2, a3, a5);
the password input subsection;
the modified session key creating subsection;
a plain text file decrypting subsection that decrypts the encrypted file (f2) into the plain text file (f1) with use of the session key (a1);
a first decrypting subsection that, if the computer has a private key (b2) corresponding to the public key (b1), decrypts the encrypted session key (a2) into the session key (a1) with use of the private key (b2), verifies the session key (a1) against the verifying data (d1), and then activates the plain text file decrypting subsection;
a second decrypting subsection that, if the computer has a private key (c2) corresponding to the public key (c1), decrypts the encrypted session key (a3) into the session key (a1) with use of the private key (c2), verifies the session key (a1) against the verifying data (d1), and then activates the plain text file decrypting subsection; and
a third decrypting subsection that decrypts the encrypted session key (a5) into the session key (a1) with use of the session key (d1) created by the modified session key creating subsection, verifies the session key (a1) against the verifying data (d1), and then activates the plain text file decrypting subsection.

9. The file encrypting/decrypting apparatus according to any one of claims 6 to 8, wherein the private key (c2) is digitally-certificated with a private key (e2) of the public-key cryptography type, and in the file decrypting process, only if a private key (x) in the computer is verified against a public key (e1) corresponding to the private key (e2) and the private key (x) is certified as the private key (c2), the second decrypting step is executed.

10. The file encrypting/decrypting apparatus according to any one of claims 6 to 8, wherein the public key (c1) is digitally-certificated with a private key (e2) of the public-key cryptography type, and in the file encrypting process, only if a public key (y) in the computer is verified against a public key (e1) corresponding to the private key (e2) and the public key (y) is certified as the public key (c1), the other steps of the file encrypting process are validated.

11. A file encrypting/decrypting program that is to be installed in a computer to make the computer execute a file encrypting process of encrypting a file and a file decrypting process of decrypting the encrypted file,
the file encrypting process comprising:
a session key creating step of creating a session key (a1) of a symmetric-key cryptography type;
a file encrypting step of encrypting a plain text file (f1) with the session key, to create an encrypted file (f2);
a first encrypting step of encrypting the session key (a1) with a public key (b1) of a public-key cryptography type, to create an encrypted session key (a2);
a second encrypting step of encrypting the session key (a1) with a public key (c1) of the public-key cryptography type, to create an encrypted session key (a3); and
a combined file creating step of creating a combined file including the encrypted file (f2) and the encrypted session keys (2, a3);
the file decrypting process comprising:
a file separating step of separating the combined file into the encrypted file (f2) and the encrypted session keys (a2, a3);
a plain text file decrypting step of, if the computer stores the session key (a1), decrypting the encrypted file (f2) into the plain text file (f1) with use of the session key (a1);
a first decrypting step of, if the computer has a private key (b2) corresponding to the public key (b1), decrypting the encrypted session key (a2) into the session key (a1) with use of the private key (b2) and then performing the plain text file decrypting step; and
a second decrypting step of, if the computer has a private key (c2) corresponding to the public key (c1), decrypting the encrypted session key (a3) into the session key (a1) with use of the private key (c2) and then performing the plain text file decrypting step.

12. A file encrypting/decrypting program that is to be installed in a computer to make the computer execute a file encrypting process of encrypting a file and a file decrypting process of decrypting the encrypted file,
the file encrypting process comprising:
a password input step of receiving a password (p1) through user input;
a session key creating step of creating a session key (a1) of a symmetric-key cryptography type;
a file encrypting step of encrypting a plain text file (f1) with the session key, to create an encrypted file (f2);
a session key modifying step of associating the session key (a1) with the password (p1) and creating a modified session key (a4) obtained by modifying the session key (a1) according to a predetermined algorithm;
a first encrypting step of encrypting the password (p1) with a public key (b1) of a public-key cryptography type, to create an encrypted password (p2);
a second encrypting step of encrypting the password (p1) with a public key (c1) of the public-key cryptography type, to create an encrypted password (p3); and
a combined file creating step of creating a combined file including the encrypted file (f2), the modified session key (a3), and the encrypted passwords (p2, p3);
the file decrypting process comprising:
a file separating step of separating the combined file into the encrypted file (f2), the modified session key (a4), and the encrypted passwords (p2, p3);
a password input step of receiving a password through user input;
a plain text file decrypting step of, if the password inputted matches the password (p1), restoring the modified session key (a4) to the session key (a1) according to the algorithm, and decrypting the encrypted file (f2) into the plain text file (f1) with use of the session key (a1);
a first decrypting step of, if the computer has a private key (b2) corresponding to the public key (b1), decrypting the encrypted password (p2) into the password (p1) with use of the private key (b2) and providing the password (p1) as the password inputted to the plain text file decrypting step; and
a second decrypting step of, if the computer has a private key (c2) corresponding to the public key (c1), decrypting the encrypted password (p3) into the password (p1) with use of the private key (c2) and providing the password (p1) as the password inputted to the plain text file decrypting step.

13. A file encrypting/decrypting program that is to be installed in a computer to make the computer execute a file encrypting process of encrypting a file and a file decrypting process of decrypting the encrypted file,
the file encrypting process comprising:
a password input step of receiving a password (p1) through user input;
a modified session key creating step of modifying, according to a predetermined algorithm, the password (p1) into a session key (p4) of a symmetric-key cryptography type;
a session key creating step of creating a session key (a1) of the symmetric-key cryptography type;
a file encrypting step of encrypting a plain text file (f1) with the session key (a1), to create an encrypted file (f2);
a verifying data creating step of creating verifying data (d1) for the session key based on the session key (a1);
a first encrypting step of encrypting the session key (a1) with a public key (b1) of a public-key cryptography type, to create an encrypted session key (a2);
a second encrypting step of encrypting the session key (a1) with a public key (c1) of the public-key cryptography type, to create an encrypted session key (a3);
a third encrypting step of encrypting the session key (a1) with the session key (d1), to create an encrypted session key (a5); and
a combined file creating step of creating a combined file including the encrypted file (f2), the verifying data (d1), and the three encrypted session keys (a2, a3, a5) ;
the file decrypting process comprising:
a file separating step of separating the combined file into the encrypted file (f2), the verifying data (d1), and the three encrypted session keys (a2, a3, a5);
the password input step;
the modified session key creating step;
a plain text file decrypting step of decrypting the encrypted file (f2) into the plain text file (f1) with use of the session key (a1);
a first decrypting step of, if the computer has a private key (b2) corresponding to the public key (b1), decrypting the encrypted session key (a2) into the session key (a1) with use of the private key (b2), verifying the session key (a1) against the verifying data (d1), and then performing the plain text file decrypting step;
a second decrypting step of, if the computer has a private key (c2) corresponding to the public key (c1), decrypting the encrypted session key (a3) into the session key (a1) with use of the private key (c2), verifying the session key (a1) against the verifying data (d1), and then performing the plain text file decrypting step; and
a third decrypting step of decrypting the encrypted session key (a5) into the session key (a1) with use of the session key (d1) created in the modified session key creating step, verifying the session key (a1) against the verifying data (d1), and then performing the plain text file decrypting step.

14. The file encrypting/decrypting program according to any one of claims 11 to 13, wherein the private key (c2) is digitally-certificated with a private key (e2) of the public-key cryptography type, and in the file decrypting process, only if a private key (x) in the computer is verified against a public key (e1) corresponding to the private key (e2) and the private key (x) is certified as the private key (c2), the second decrypting step is executed.

15. The file encrypting/decrypting program according to any one of claims 11 to 13, wherein the public key (c1) is digitally-certificated with a private key (e2) of the public-key cryptography type, and in the file encrypting process, only if a public key (y) in the computer is verified against a public key (e1) corresponding to the private key (e2) and the public key (y) is certified as the public key (c1), the other steps of the file encrypting process are validated.

16. A computer-readable recording medium storing the file encrypting/decrypting program according to any one of claims 11 to 15.

## Amended claims

### Amended claims under Art. 19.1 PCT

1. A file encrypting/decrypting method with which a computer executes a file encrypting process of encrypting a file and a file decrypting process of decrypting the encrypted file,
the file encrypting process comprising:
a session key creating step of creating a session key (a1) of a symmetric-key cryptography type;
a file encrypting step of encrypting a plain text file (f1) with the session key (a1), to create an encrypted file (f2);
a first encrypting step of encrypting the session key (a1) with a public key (b1) of a public-key cryptography type, to create an encrypted session key (a2);
a second encrypting step of encrypting the session key (a1) with a public key (c1) of the public-key cryptography type, to create an encrypted session key (a3); and
a combined file creating step of creating a combined file including the encrypted file (f2) and the encrypted session keys (a2, a3);
the file decrypting process comprising:
a file separating step of separating the combined file into the encrypted file (f2) and the encrypted session keys (a2, a3) ;
a plain text file decrypting step of, if the computer stores the session key (a1), decrypting the encrypted file (f2) into the plain text file (f1) with use of the session key (a1);
a first decrypting step of, if the computer has a private key (b2) corresponding to the public key (b1), decrypting the encrypted session key (a2) into the session key (a1) with use of the private key (b2) and then performing the plain text file decrypting step; and
a second decrypting step of, if the computer has a private key (c2) corresponding to the public key (c1), decrypting the encrypted session key (a3) into the session key (a1) with use of the private key (c2) and then performing the plain text file decrypting step.

2. A file encrypting/decrypting method with which a computer executes a file encrypting process of encrypting a file and a file decrypting process of decrypting the encrypted file,
the file encrypting process comprising:
a password input step of receiving a password (p1) through user input;
a session key creating step of creating a session key (a1) of a symmetric-key cryptography type;
a file encrypting step of encrypting a plain text file (f1) with the session key (a1), to create an encrypted file (f2);
a session key modifying step of associating the session key (a1) with the password (p1) and creating a modified session key (a4) obtained by modifying the session key (a1) according to a predetermined algorithm;
a first encrypting step of encrypting the password (p1) with a public key (b1) of a public-key cryptography type, to create an encrypted password (p2);
a second encrypting step of encrypting the password (p1) with a public key (c1) of the public-key cryptography type, to create an encrypted password (p3); and
a combined file creating step of creating a combined file including the encrypted file (f2), the modified session key (a4), and the encrypted passwords (p2, p3);
the file decrypting process comprising:
a file separating step of separating the combined file into the encrypted file (f2), the modified session key (a4), and the encrypted passwords (p2, p3);
a password input step of receiving a password through user input;
a plain text file decrypting step of, if the password received in the password input step matches the password (p1), restoring the modified session key (a4) to the session key (a1) according to the algorithm, and decrypting the encrypted file (f2) into the plain text file (f1) with use of the session key (a1);
a first decrypting step of, if the computer has a private key (b2) corresponding to the public key (b1), decrypting the encrypted password (p2) into the password (p1) with use of the private key (b2) and providing the password (p1) as the password inputted to the plain text file decrypting step; and
a second decrypting step of, if the computer has a private key (c2) corresponding to the public key (c1), decrypting the encrypted password (p3) into the password (p1) with use of the private key (c2) and providing the password (p1) as the password inputted to the plain text file decrypting step.

3. A file encrypting/decrypting method with which a computer executes a file encrypting process of encrypting a file and a file decrypting process of decrypting the encrypted file,
the file encrypting process comprising:
a password input step of receiving a password (p1) through user input;
a modified session key creating step of modifying, according to a predetermined algorithm, the password (p1) into a session key (p4) of a symmetric-key cryptography type;
a session key creating step of creating a session key (a1) of the symmetric-key cryptography type;
a file encrypting step of encrypting a plain text file (f1) with the session key (a1), to create an encrypted file (f2);
a verifying data creating step of creating verifying data (d1) for the session key based on the session key (a1);
a first encrypting step of encrypting the session key (a1) with a public key (b1) of a public-key cryptography type, to create an encrypted session key (a2);
a second encrypting step of encrypting the session key (a1) with a public key (c1) of the public-key cryptography type, to create an encrypted session key (a3);
a third encrypting step of encrypting the session key (a1) with the session key (p4), to create an encrypted session key (a5); and
a combined file creating step of creating a combined file including the encrypted file (f2), the verifying data (d1), and the three encrypted session keys (a2, a3, a5);
the file decrypting process comprising:
a file separating step of separating the combined file into the encrypted file (f2), the verifying data (d1), and the three encrypted session keys (a2, a3, a5);
a plain text file decrypting step of decrypting the encrypted file (f2) into the plain text file (f1) with use of the session key (a1);
a password input step of receiving a password through user input;
a session key decrypting step of, if the password received in the password input step matches the password (p1), modifying, according to the algorithm, the password (p1) into a modified session key (p4) and decrypting the encrypted session key (a5) into the session key (a1) with use of the modified session key (p4);
a first decrypting step of verifying the session key (a1) decrypted in the session key decrypting step against the verifying data (d1), and then performing the plain text file decrypting step;
a second decrypting step of, if the computer has a private key (b2) corresponding to the public key (b1), decrypting the encrypted session key (a2) into the session key (a1) with use of the private key (b2), verifying the session key (a1) against the verifying data (d1), and then performing the plain text file decrypting step; and
a third decrypting step of, if the computer has a private key (c2) corresponding to the public key (c1), decrypting the encrypted session key (a3) into the session key (a1) with use of the private key (c2), verifying the session key (a1) against the verifying data (d1), and then performing the plain text file decrypting step.

4. The file ezxcrypting/decrypting method according to any one of claims 1 to 3, wherein the private key (c2) is digitally-certificated with a private key (e2) of the public-key cryptography type, and in the file decrypting process, only if a private key (x) in the computer is verified against a public key (e1) corresponding to the private key (e2) and the private key (x) is certified as the private key (c2), the second decrypting step is executed.

5. The file encrypting/decrypting method according to any one of claims 1 to 3, wherein the public key (c1) is digitally-certificated with a private key (e2) of the public-key cryptography type, and in the file encrypting process, only if a public key (y) in the computer is verified against a public key (e1) corresponding to the private key (e2) and the public key (y) is certified as the public key (c1), the other steps of the file encrypting process are validated.

6. A file encrypting/decrypting apparatus constituted by a computer having a program installed therein, the file encrypting/decrypting apparatus comprising:
a file encrypting section that encrypts a file; and
a file decrypting section that decrypts the file encrypted by the file encrypting section;
the file encrypting section including:
a session key creating subsection that creates a session key (a1) of a symmetric-key cryptography type;
a file encrypting subsection that encrypts a plain text file (f1) with the session key (a1), to create an encrypted file (f2);
a first encrypting subsection that encrypts the session key (a1) with a public key (b1) of a public-key cryptography type, to create an encrypted session key (a2);
a second encrypting subsection that encrypts the session key (a1) with a public key (c1) of the public-key cryptography type, to create an encrypted session key (a3); and
a combined file creating subsection that creates a combined file including the encrypted file (f2) and the encrypted session keys (a2, a3);
the file decrypting section including:
a file separating subsection that separates the combined file into the encrypted file (f2) and the encrypted session keys (a2, a3);
a plain text file decrypting subsection that, if the computer stores the session key (a1), decrypts the encrypted file (f2) into the plain text file (f1) with use of the session key (a1);
a first decrypting subsection that, if the computer has a private key (b2) corresponding to the public key (b1), decrypts the encrypted session key (a2) into the session key (a1) with use of the private key (b2) and then executes the plain text file decrypting step; and
a second decrypting subsection that, if the computer has a private key (c2) corresponding to the public key (c1) decrypts the encrypted session key (a3) into the session key (a1) with use of the private key (c2) and then executes the plain text file decrypting step.

7. A file encrypting/decrypting apparatus constituted by a computer having a program installed therein, the file encrypting/decrypting apparatus comprising:
a file encrypting section that encrypts a file; and
a file decrypting section that decrypts the file encrypted by the file encrypting section;
the file encrypting section including:
a password input step of receiving a password (p1) through user input;
a session key creating subsection that creates a session key (a1) of a symmetric-key cryptography type;
a file encrypting subsection that encrypts a plain text file (f1) with the session key (a1), to create an encrypted file (f2);
a session key modifying subsection that associates the session key (a1) with the password (p1) and creates a modified session key (a4) obtained by modifying the session key (a1) according to a predetermined algorithm;
a first encrypting subsection that encrypts the password (p1) with a public key (b1) of a public-key cryptography type, to create an encrypted password (p2);
a second encrypting subsection that encrypts the password (p1) with a public key (c1) of the public-key cryptography type, to create an encrypted password (p3); and
a combined file creating subsection that creates a combined file including the encrypted file (f2), the modified session key (a4), and the encrypted passwords (p2, p3);
the file decrypting section including:
a file separating subsection that separates the combined file into the encrypted file (f2), the modified session key (a4), and the encrypted passwords (p2, p3);
a password input subsection that receives a password through user input;
a plain text file decrypting subsection that, if the password received by the password input subsection matches the password (p1), restores the modified session key (a4) to the session key (a1) according to the algorithm, and decrypts the encrypted file (f2) into the plain text file (f1) with use of the session key (a1);
a first decrypting subsection that, if the computer has a private key (b2) corresponding to the public key (b1), decrypts the encrypted password (p2) into the password (p1) with use of the private key (b2) and provides the password (p1) as the password inputted to the plain text file decrypting subsection; and
a second decrypting subsection that, if the computer has a private key (c2) corresponding to the public key (c1), decrypts the encrypted password (p3) into the password (p1) with use of the private key (c2) and provides the password (p1) as the password inputted to the plain text file decrypting subsection.

8. A file encrypting/decrypting apparatus constituted by a computer having a program installed therein, the file encrypting/decrypting apparatus comprising:
a file encrypting section that encrypts a file; and
a file decrypting section that decrypts the file encrypted by the file encrypting section;
the file encrypting section including:
a password input subsection that receives a password (p1) through user input;
a modified session key creating subsection that modifies, according to a predetermined algorithm, the password (p1) into a session key (p4) of a symmetric-key cryptography type;
a session key creating subsection that creates a session key (a1) of the symmetric-key cryptography type;
a file encrypting subsection that encrypts a plain text file (f1) with the session key (a1), to create an encrypted file (f2);
a verifying data creating subsection that creates verifying data (d1) for the session key based on the session key (a1);
a first encrypting subsection that encrypts the session key (a1) with a public key (b1) of a public-key cryptography type, to create an encrypted session key (a2);
a second encrypting subsection that encrypts the session key (a1) with a public key (c1) of the public-key cryptography type, to create an encrypted session key (a3);
a third encrypting subsection that encrypts the session key (a1) with the session key (p4), to create an encrypted session key (a5) ; and
a combined file creating subsection that creates a combined file including the encrypted file (f2), the verifying data (d1), and the three encrypted session keys (a2, a3, a5);
the file decrypting section including:
a file separating subsection that separates the combined file into the encrypted file (f2), the verifying data (d1), and the three encrypted session keys (a2, a3, a5);
a plain text file decrypting subsection that decrypts the encrypted file (f2) into the plain text file (f1) with use of the session key (a1);
a password input subsection that receives a password through user input;
a session key decrypting subsection that, if the password received by the password input subsection matches the password (p1), modifies, according to the algorithm, the password (p1) into a modified session key (p4) and decrypts the encrypted session key (a5) into the session key (a1) with use of the modified session key (p4);
a first decrypting subsection that verifies the session key (a1) decrypted by the session key decrypting subsection against the verifying data (d1), and then activates the plain text file decrypting subsection with the session key (a1) ;
a second decrypting subsection that, if the computer has a private key (b2) corresponding to the public key (b1), decrypts the encrypted session key (a2) into the session key (a1) with use of the private key (b2), verifies the session key (a1) against the verifying data (d1), and then activates the plain text file decrypting subsection; and
a third decrypting subsection that, if the computer has a private key (c2) corresponding to the public key (c1), decrypts the encrypted session key (a3) into the session key (a1) with use of the private key (c2), verifies the session key (a1) against the verifying data (d1), and then activates the plain text file decrypting subsection.

9. The file encrypting/decrypting apparatus according to any one of claims 6 to 8, wherein the private key (c2) is digitally-certificated with a private key (e2) of the public-key cryptography type, and in the file decrypting process, only if a private key (x) in the computer is verified against a public key (e1) corresponding to the private key (e2) and the private key (x) is certified as the private key (c2), the second decrypting step is executed.

10. The file encrypting/decrypting apparatus according to any one of claims 6 to 8, wherein the public key (c1) is digitally-certificated with a private key (e2) of the public-key cryptography type, and in the file encrypting process, only if a public key (y) in the computer is verified against a public key (e1) corresponding to the private key (e2) and the public key (y) is certified as the public key (c1), the other steps of the file encrypting process are validated.

11. A file encryptizzg/decrypting program that is to be installed in a computer to make the computer execute a file encrypting process of encrypting a file and a file decrypting process of decrypting the encrypted file,
the file encrypting process comprising:
a session key creating step of creating a session key (a1) of a symmetric-key cryptography type;
a file encrypting step of encrypting a plain text file (f1) with the session key (a1), to create an encrypted file (f2);
a first encrypting step of encrypting the session key (a1) with a public key (b1) of a public-key cryptography type, to create an encrypted session key (a2);
a second encrypting step of encrypting the session key (a1) with a public key (c1) of the public-key cryptography type, to create an encrypted session key (a3); and
a combined file creating step of creating a combined file including the encrypted file (f2) and the encrypted session keys (a2, a3);
the file decrypting process comprising:
a file separating step of separating the combined file into the encrypted file (f2) and the encrypted session keys (a2, a3) ;
a plain text file decrypting step of, if the computer stores the session key (a1), decrypting the encrypted file (f2) into the plain text file (f1) with use of the session key (a1);
a first decrypting step of, if the computer has a private key (b2) corresponding to the public key (b1), decrypting the encrypted session key (a2) into the session key (a1) with use of the private key (b2) and then performing the plain text file decrypting step; and
a second decrypting step of, if the computer has a private key (c2) corresponding to the public key (c1), decrypting the encrypted session key (a3) into the session key (a1) with use of the private key (c2) and then performing the plain text file decrypting step.

12. A file encrypting/decrypting program that is to be installed in a computer to make the computer execute a file encrypting process of encrypting a file and a file decrypting process of decrypting the encrypted file,
the file encrypting process comprising:
a password input step of receiving a password (p1) through user input;
a session key creating step of creating a session key (a1) of a symmetric-key cryptography type;
a file encrypting step of encrypting a plain text file (f1) with the session key (a1), to create an encrypted file (f2);
a session key modifying step of associating the session key (a1) with the password (p1) and creating a modified session key (a4) obtained by modifying the session key (a1) according to a predetermined algorithm;
a first encrypting step of encrypting the password (p1) with a public key (b1) of a public-key cryptography type, to create an encrypted password (p2);
a second encrypting step of encrypting the password (p1) with a public key (c1) of the public-key cryptography type, to create an encrypted password (p3); and
a combined file creating step of creating a combined file including the encrypted file (f2), the modified session key (a4), and the encrypted passwords (p2, p3);
the file decrypting process comprising:
a file separating step of separating the combined file into the encrypted file (f2), the modified session key (a4), and the encrypted passwords (p2, p3);
a password input step of receiving a password through user input;
a plain text file decrypting step of, if the password received in the password input step matches the password (p1), restoring the modified session key (a4) to the session key (a1) according to the algorithm, and decrypting the encrypted file (f2) into the plain text file (f1) with use of the session key (a1);
a first decrypting step of, if the computer has a private key (b2) corresponding to the public key (b1), decrypting the encrypted password (p2) into the password (p1) with use of the private key (b2) and providing the password (p1) as the password inputted to the plain text file decrypting step; and
a second decrypting step of, if the computer has a private key (c2) corresponding to the public key (c1), decrypting the encrypted password (p3) into the password (p1) with use of the private key (c2) and providing the password (p1) as the password inputted to the plain text file decrypting step.

13. A file encrypting/decrypting program that is to be installed in a computer to make the computer execute a file encrypting process of encrypting a file and a file decrypting process of decrypting the encrypted file,
the file encrypting process comprising:
a password input step of receiving a password (p1) through user input;
a modified session key creating step of modifying, according to a predetermined algorithm, the password (p1) into a session key (p4) of a symmetric-key cryptography type;
a session key creating step of creating a session key (a1) of the symmetric-key cryptography type;
a file encrypting step of encrypting a plain text file (f1) with the session key (a1), to create an encrypted file (f2);
a verifying data creating step of creating verifying data (d1) for the session key based on the session key (a1);
a first encrypting step of encrypting the session key (a1) with a public key (b1) of a public-key cryptography type, to create an encrypted session key (a2);
a second encrypting step of encrypting the session key (a1) with a public key (c1) of the public-key cryptography type, to create an encrypted session key (a3);
a third encrypting step of encrypting the session key (a1) with the session key (p4), to create an encrypted session key (a5); and
a combined file creating step of creating a combined file including the encrypted file (f2), the verifying data (d1), and the three encrypted session keys (a2, a3, a5);
the file decrypting process comprising:
a file separating step of separating the combined file into the encrypted file (f2), the verifying data (d1), and the three encrypted session keys (a2, a3, a5);
a plain text file decrypting step of decrypting the encrypted file (f2) into the plain text file (f1) with use of the session key (a1);
a password input step of receiving a password through user input;
a session key decrypting step of, if the password received in the password input step matches the password (p1), modifying, according to the algorithm, the password (p1) into a modified session key (p4) and decrypting the encrypted session key (a5) into the session key (a1) with use of the modified session key (p4);
a first decrypting step of verifying the session key (a1) decrypted in the session key decrypting step against the verifying data (d1), and then performing the plain text file decrypting step;
a second decrypting step of, if the computer has a private key (b2) corresponding to the public key (b1), decrypting the encrypted session key (a2) into the session key (a1) with use of the private key (b2), verifying the session key (a1) against the verifying data (d1), and then performing the plain text file decrypting step; and
a third decrypting step of, if the computer has a private key (c2) corresponding to the public key (c1), decrypting the encrypted session key (a3) into the session key (a1) with use of the private key (c2), verifying the session key (a1) against the verifying data (d1), and then performing the plain text file decrypting step.

14. The file encrypting/decrypting program according to any one of claims 11 to 13, wherein the private key (c2) is digitally-certificated with a private key (e2) of the public-key cryptography type, and in the file decrypting process, only if a private key (x) in the computer is verified against a public key (e1) corresponding to the private key (e2) and the private key (x) is certified as the private key (c2), the second decrypting step is executed.

15. The file encrypting/decrypting program according to any one of claims 11 to 13, wherein the public key (c1) is digitally-certificated with a private key (e2) of the public-key cryptography type, and in the file encrypting process, only if a public key (y) in the computer is verified against a public key (e1) corresponding to the private key (e2) and the public key (y) is certified as the public key (c1), the other steps of the file encrypting process are validated.

16. A computer-readable recording medium storing the file encrypting/decrypting program according to any one of claims 11 to 15.

Statement under Art. 19.1 PCT
Claims 1, 8, and 11 have been amended to add the reference character "a1" after the term "session key" which should have been accompanied by the reference character "a1", and to correct the term "encrypted session keys (2" to " encrypted session keys (a2".

Claims 2, 7, and 12 have been amended to add the reference character "al" after the term "session key" which should have been accompanied by the reference character "a1". As to claim 7, the term "modified session key (a3) " has been corrected to "modified session key (a4)". Further, the term "the password inputted" has been amended to "the password received in the password input step (by the password input subsection) ". This amendment is based on the disclosure in paragraph [0028] of the Description.

Claims 3, 8, and 13 have been amended to correct the term "session key (d1) " to "session key (p4) ". Further, an amendment has been made to clarify the configuration of the "plain text file decrypting step (subsection)", "password input step (subsection)", "session key decrypting step (subsection) ", and "first decrypting step (subsection)". This amendment is based on the disclosure in paragraphs [0034] and [0035] of the Description.
